(19) **Europäisches Patentamt**
**European Patent Office**
**Office européen des brevets**

(11) **EP 2 634 934 B1**

(12) **EUROPEAN PATENT SPECIFICATION**

(45) Date of publication and mention of the grant of the patent:
**04.05.2016 Bulletin 2016/18**

(51) Int Cl.:
***H04B 10/50*** *(2013.01)*

(21) Application number: **12305035.3**

(22) Date of filing: **10.01.2012**

(54) **Optical transmitter**

Optischer Sender

Transmetteur optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.09.2013 Bulletin 2013/36**

(73) Proprietor: **ALCATEL LUCENT**
**92100 Boulogne-Billancourt (FR)**

(72) Inventors:
• **Buchali, Fred**
**71336 Waiblingen (DE)**
• **Schuh, Karsten**
**70188 Stuttgart (DE)**

(74) Representative: **Wetzel, Emmanuelle**
**Alcatel Lucent**
**Intellectual Property & Standards**
**70430 Stuttgart (DE)**

(56) References cited:
**US-B1- 7 826 752**

• **MORIYA NAKAMURA ET AL: "Experimental demonstration of 16-QAM transmission with a single dual-drive Mach-Zehnder modulator", OPTICAL FIBER COMMUNICATION CONFERENCE, 2011. TECHNICAL DIGEST. OFC/NFOEC, IEEE, 6 March 2011 (2011-03-06), pages 1-3, XP031946042, ISBN: 978-1-4577-0213-6**

Printed by Jouve, 75001 PARIS (FR)

## Description

## Field of the Invention

The present invention relates to the field of telecommunications and more particularly to a transmitter for high bitrate optical data transmission.

## Background of the Invention

In optical transmission networks, the amount of data to be transmitted is ever increasing, thus leading to higher bitrates and the development of system with higher spectral efficiency. Wavelength division multiplexing is used to transmit a plurality of data signals at different carrier wavelengths over an standard single-mode optical fiber. A further degree of freedom that can be utilized is the signal polarization, so that signals at the same wavelength but having orthogonal polarization can be transmitted in parallel over a fiber.

Today, systems are available that can transport 100 Gb/s signals per wavelength using a combination of QPSK modulation (quadrature phase-shift keying) and polarization multiplexing. The use of higher constellation modulation schemes such 16-QAM (quadrature amplitude modulation) has been proposed, which involves modulation of phase and amplitude. However, commercially applicable transmitters for optical x-QAM do not exist so far.

The conference article "Experimental Demonstration of 16-QAM Transmission with a Single Dual-Drive Mach-Zehnder Modulator" by M. Nakamura et al., proc. OFC 2011, paper JThA42, describes an experimental demonstration of 10-Gbit/s 16-QAM transmission over 160-km optical fiber using a single DD-MZM. Pre-equalization by electronic digital signal processing with a 16-tap transversal filter was applied to the signals to suppress inter-symbol interference caused by non-ideal frequency characteristics of the modulator and electric devices.

US7826752 describes an optical transmitter which employs high speed CMOS DACs to drive a vector integrated optical modulator with an "in-phase" RF signal and a "quadrature phase" RF signal. A digital signal processor allows to produce software definable data rates and modulation formats.

## Summary of the Invention

It is therefore an object of the present invention to provide an optical transmitter that allows reliable QAM transmission.

These and other objects that appear below are achieved by an optical transmitter according to the appended claims, which contains a digital signal processor coupled to a digital-to-analog converter for generating multi-level drive signals; and an I/Q modulator for modulating an optical carrier signal with the drive signals to generate a quadrature amplitude modulated optical signal. The digital signal processor performs at least one digital filter function on data elements to be transmitted to pre-compensate for a non-linear characteristic of at least one circuit component of the optical transmitter causing distortions in said quadrature amplitude modulated optical signal.

The present embodiments provide a solution with a high spectral efficiency, improved performance and increased the transmission reach.

## Brief Description of the Drawings

Preferred embodiments of the present invention will now be described with reference to the accompanying drawings in which

figure 1      shows a block diagram of an optical transmitter in an embodiment;

figure 2      shows a constellation diagram of 16-QAM;

figure 3      shows an first embodiment of a digital pre-filter stage that can be implemented into an DSP;

figure 4      shows a second embodiment of a digital pre-filter stage;

figure 5      shows a look-up table that can be used to perform a non-linear filter function within a DSP;

figure 6      shows a characteristic curve of an I/Q modulator;

figure 7      shows a third embodiment of a digital pre-filter stage;

figure 8      shows a transmitter applying polarization multiplexing;

figure 9      shows an embodiment of an optical receiver for coherent detection, which can be utilized to adjust filter parameters in the optical transmitter;

figure 10     shows an embodiment for a signaling of parameters measured at a receiver via a feedback channel; and

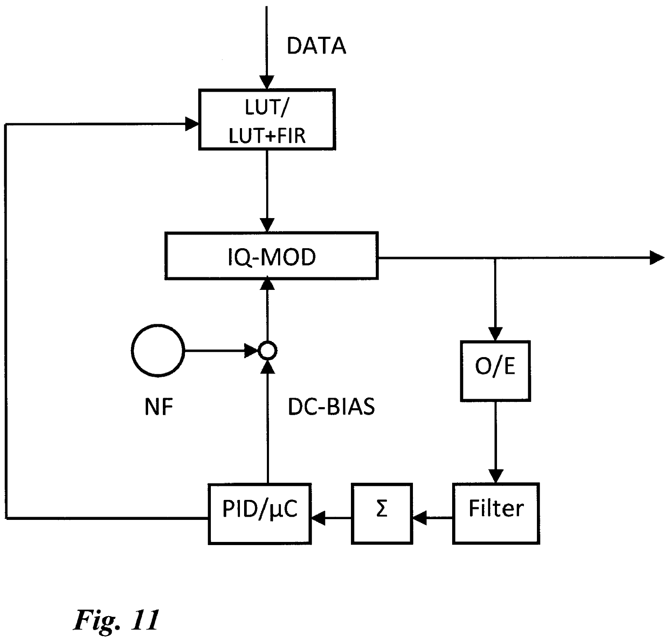

figure 11     sows a further embodiment of an optical transmitter.

## Detailed Description of the Invention

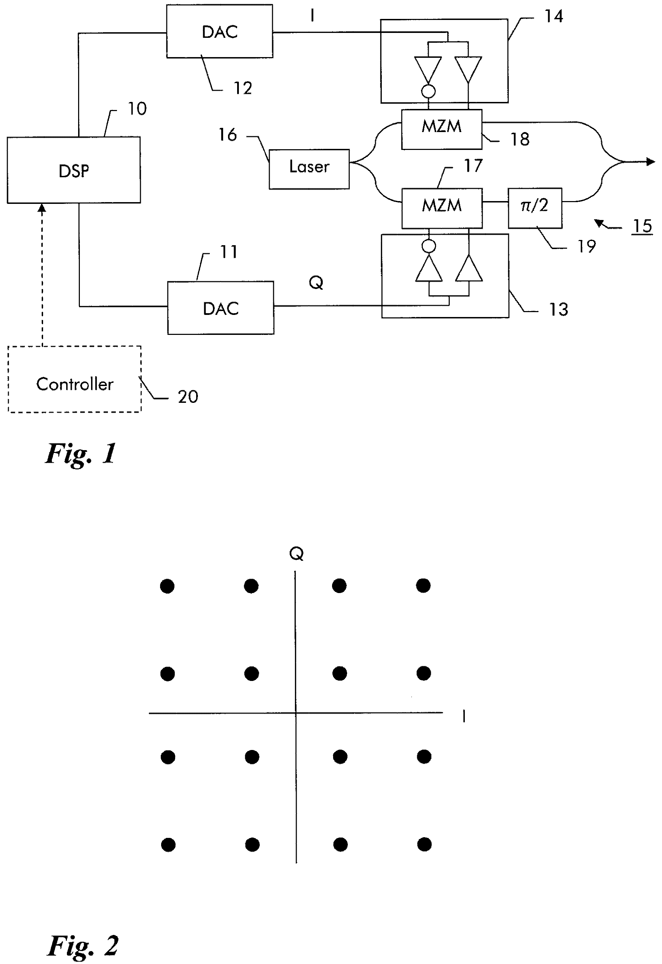

An optical transmitter suitable to generate x-QAM signals is shown schematically in figure 1. A digital signal processor (DSP) 10 generates two digital signals, which are fed to two digital/analog converters (DAC) 11, 12. The analog output signals of DACs 11, 12 serve as in-phase (I) and quadrature (Q) signal components and are fed to two driver circuits 13, 14, which drive an I/Q modulator 15. I/Q modulator 15 modulates the laser light of a cw laser light source 16 to generate a 16-QAM signal for transmission. An optional controller 20 can be provided to adjust certain parameters of the DSP, as will be explained further below. Controller 20 can be implemented for example with a microprocessor or, in the most simple case, as a PID controller (proportional-integral-derivative controller).

I/Q modulator 15 contains an interferometer structure with two branches. Mach-Zehnder modulators (MZM) 13, 14 are arranged in each of the two branches with an additional $\pi/2$ phase shifter 19 in one branch. Driver circuits 13, 14 generate differential drive signals I, -I and Q, -Q for MZMs 17, 18, respectively. This is indicated through an amplifier and an inverted amplifier within the driver circuits 13, 14 in figure 1.

At the constructive output of the I/Q modulator 15, an I/Q modulated optical signal will be emitted for transmission over an optical fiber link.

While for the generation of a QPSK modulated signal, the I and Q components are binary signals, only, the present embodiment utilizes multi-level drive signals to support higher constellation modulation formats. This is achieved by using a DSP in combination with DACs for the I and Q branches.

The two MZMs 17, 18 operate as amplitude modulators. Since the signals from the two branches of I/Q modulator 15 are shifted by 90° ($\pi/2$) in optical phase, the constructive output of I/Q modulator 15 is a signal modulated in amplitude and phase, as required for x-QAM.

The DACs have a resolution that is higher than the number of bits per symbol of each signal component (I/Q). For 16-QAM, the I and Q signal components each have 4 signal levels per symbol, i.e. 2 bit. The DACs hence preferably have a higher granularity of output levels and thus a resolution of more than 2 bit. In the embodiment, the DACs actually have a resolution of 6 bit, but an even higher resolution of for instance 8 bit could be envisaged. The higher resolution of the DAC allows to adjust the modulation levels with high precision.

The symbol rates, at which the optical signal will be modulated are in the range of 30 GBd. More particularly, in the envisaged application, the symbol rate will be 32 GBd. For 16-QAM, each symbol carries 4 bit (which results in 16 constellation points). A rectangular constellation diagram for 16-QAM is shown by way of example in figure 2, where I and Q signal components span a complex plane for amplitude and phase of the output signal. The constellation diagram in this example is rectangular, as this can be generated easily with the described modulator arrangement. It should be clear, however, that other constellations, such as hexagonal or circular constellations can be applied in the same way, by properly adjusting I and Q drive signal components.

As signals can be transmitted at two orthogonal states of polarization, another factor of 2 comes into play. With a symbol rate of 32 GBd, this results in a total data rate of 2 * 4 bit * 32 GBd = 256 Gbit/s, which would be sufficient to transport a 200 Gbit/s data signal plus overhead and FEC frame per wavelength using a 50 GHz DWDM wavelength grid.

In the subject embodiment, the DAC is operated with a sampling rate equal to the symbol rate. However, it may be beneficial to apply a higher sampling rate, i.e. oversampling, to generate even better analog drive signal waveforms for the I/Q modulator.

At the envisaged high symbol rates, several effects and limitations of the electrical and optical components of the transmitter will affect the output signal and lead to non-linear signal distortions. Therefore, the DAC implements a digital filter function to achieve a pre-compensation of one or more component characteristics.

The effective bandwidth characteristic of an ideal DAC follows a sinc function (sinus cardialis), i.e. the Fourier transform of a rectangular input pulse. In digital signal processing, the normalized sinc function is commonly defined by

$$\text{sinc}(x) = \frac{\sin(\pi x)}{\pi x}.$$

Due to this theoretical bandwidth characteristic, a D/A converted output signal is degraded even in an ideal DAC and would not follow the shape of a rectangular input pulse.

In addition to the theoretical bandwidth characteristic of an ideal DAC, real DACs further show a bandwidth limitation towards higher frequencies, which will become relevant at the envisaged symbol rates. A further limitation of DACs, as available today, is an asymmetry due to different speeds for switching an output signal on and off.

Further to this, the I/Q modulator 15 shows a non-linear response curve. While for a multi-level signal, the highest and lowest levels are in a saturation region, the modulator shows a much higher variation of output voltage per digit at the medium levels. Thus, a precise adjustment of the modulation levels is desirable. In addition to such static behavior, the I/Q modulator 15 shows a dynamic behavior, such as for example temperature drift, so that a dynamic adjustment of the modulation levels is beneficial, too.

Furthermore, the driver circuits 13, 14 have a non-linear characteristic and may show a temperature dependant drift, as well, that can be compensated through proper pre-compensation.

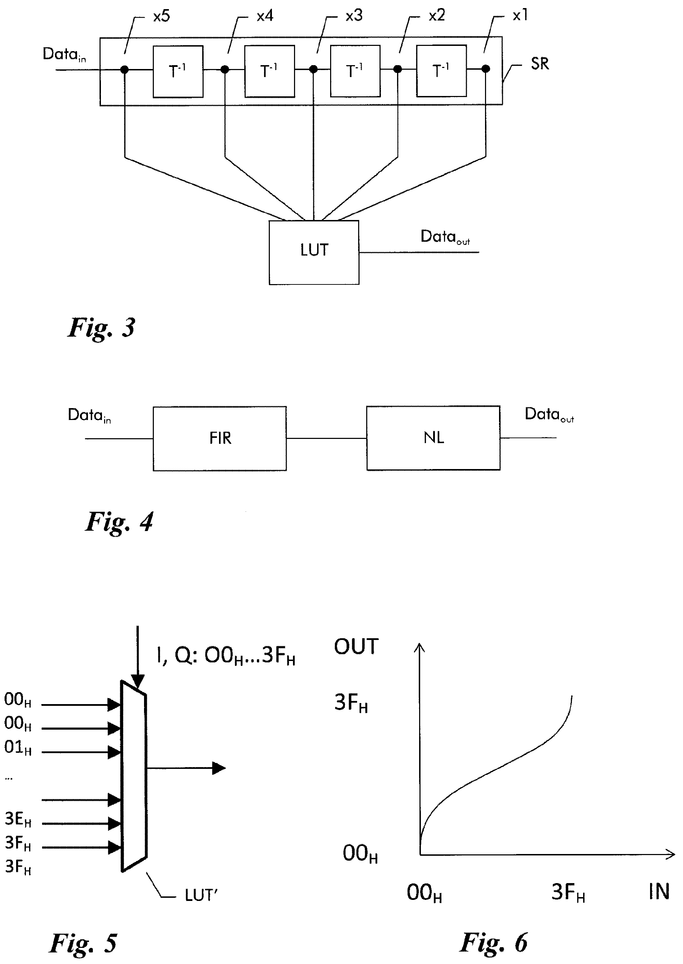

For these reasons, the DAC implements a digital filter function that pre-compensates at least one of the aforementioned component characteristics. As due to the component characteristic, the filter function is typically non-linear, the filter function can be implemented with a look-up table. Figure 3 shows an implementation using a look-up table LUT. Input data $\text{Data}_{in}$ are written to a storage device such as a shift register SR. In the shown implementation, 5 consecutive data symbols x1-x5 are considered. I and Q signal components are filtered individually and thus separate look-up tables will be provided for the two signal components, where each of the data symbols contains 2 bit per signal component.

The individual 2 bit symbol components are fed as address values to the look-up table LUT, which contains 6 bit wide output values for any possible input symbol combinations. This output value is then read and sent as output signal Data$_{out}$. Considering in figure 3 data symbol x3 (n=3) as the current element, it becomes clear that the filter algorithm takes into account contributions from the direct neighboring elements n±1 and the next adjacent elements n±2. The data elements in the look-up table can be calculated according to a theoretical or known filter characteristic or can be determined experimentally using test patterns to adjust the DACs for the I and Q branches.

In the system figure 3, look-up table LUT contains $4^5$ = 1024 data values of 6 bit for I and Q, each. As existing DSPs operate at clock rates in the range of few GHz, but the input signal comes and must be processed at a symbol rate of 30 GBd, processing must be highly parallelized. This shows that particularly for larger symbol combinations, the look-up table implementation becomes less practical due the amount of required memory size.

Therefore, the invention comprises a combination of a finite impulse response (FIR) filter and filter with non-linear characteristics NL, as shown schematically in figure 4, is a good alternative. FIR filters are suited to pre-compensate for linear distortions. The number of parameters required for adjustment is very limited, e.g., an n-tap FIR filter requires only n tap weights.

In addition a nonlinear characteristic is required to compensate for the sine function of the modulator and for the soft clipping/limitation of the DAC and driver amplifier. The curve applied by non-linear filter NL is in the present embodiment a function that can be expressed as

$$c*sin^{-1}(d*x)-e$$

The parameters c, d, and e of this function can be optimized statically or dynamically. The combination is this non-linear characteristics filter function NL plus an n-tap FIR filter represents a good compromise to approximate the required non-linear pre-compensation filter function. Figure 5 shows an implementation for the NL filter function through a simple one-dimensional look-up table LUT', which contains for each 6 bit input word 00hex - 3Fhex of I or Q (already pre-corrected through the preceding FIR filter) a corrected 6 bit output value.

An example for a correction function that can be implemented with the look-up table LUT' from figure 5 is shown in figure 6. The function provides for each input value IN a corrected output value OUT. The correction function in figure 6 represents an inverse sine function as described above to correct for the modulator characteristic.

An improved embodiment for the filter function is shown in figure 6. Since the size of the look-up table grows exponentially with the number of taps, the implementation shown here limits the lookup table to a subset of the elements in the center of the considered sequence of symbols and provides linear FIR filters for additional symbols farther away from the center element.

In this embodiment, shift register SR has seven storage locations for data elements x1-x7. Central data element x4 and the directly preceding and subsequent elements x3 and x5 are fed to a look-up table LUT, which implements a non-linear filter function. Data elements x2 and x1 are fed to a first FIR filter FIR1 and data elements x6 and x7 are fed to a second FIR filter FIR2. The results of look-up table LUT and FIR filters FIR1, FIR2 are added by an adder circuit ADD.

FIR filter FIR 1 multiplies data element x1 with a weight $b_0$, data element x2 with a weight $b_1$ and sums these up. Similarly, FIR filter FIR 2 multiplies data element x6 with a weight $b_2$, data element x7 with a weight $b_3$ and sums these up. An example for a look-up table used in the embodiment is shown in table 1 below.

Table 1: Example for a look-up table used in the embodiment of fig. 6

| | | x5=0 | x5=1 | x5=2 | x5=3 |
|---|---|---|---|---|---|
| x4=0 | x3=0 | 17 | 13 | 11 | 8 |
| | x3=1 | 14 | 11 | 9 | 5 |
| | x3=2 | 12 | 8 | 6 | 3 |
| | x3=3 | 9 | 6 | 3 | 0 |
| x4=1 | x3=0 | 32 | 29 | 27 | 24 |
| | x3=1 | 30 | 27 | 25 | 21 |
| | x3=2 | 28 | 24 | 22 | 19 |
| | x3=3 | 25 | 22 | 19 | 16 |
| x4=2 | x3=0 | 47 | 44 | 42 | 38 |
| | x3=1 | 45 | 42 | 39 | 36 |
| | x3=2 | 42 | 39 | 37 | 34 |
| | x3=3 | 40 | 36 | 34 | 31 |
| x4=3 | x3=0 | 63 | 60 | 57 | 54 |
| | x3=1 | 61 | 57 | 55 | 52 |
| | x3=2 | 58 | 55 | 53 | 49 |
| | x3=3 | 55 | 52 | 50 | 46 |

An example for modulation levels, adjusted to pre-compensate for the modulator characteristics, would be:

    00 bin → 00 hex
    01 bin → 17 hex
    10 bin → 20 hex
    11 bin → 3F hex

The output from adder circuit ADD can optionally feed to another non-linear filter function NL such as the filter function show in figures 5 and 6. This allows to separate influences from different circuit components of the transmitter and thus permits simplified dynamic adjustment of filter characteristics.

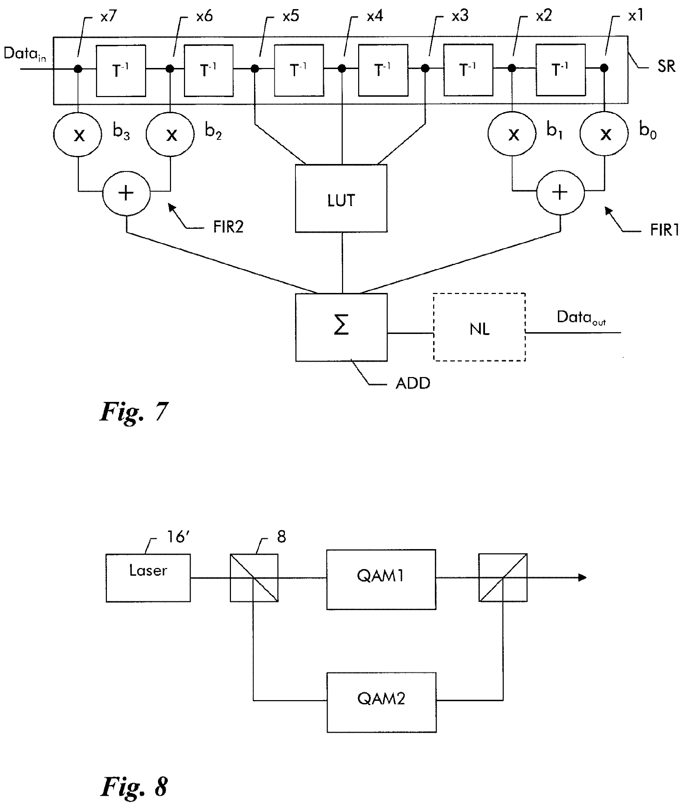

An extension of the optical transmitter from figure 1 applying polarization division multiplexing is shown in figure 8. The cw laser light from a laser 16' is split through polarization beam splitter 8 in two orthogonal polarization components, each of which is fed to a QAM transmitter QAM1, QAM2 similar to the one shown in figure 1 (with laser 16 from figure 1 replaced through laser 16' in figure 8). The output of the two QAM transmitters is combined and transmitted over a fiber link.

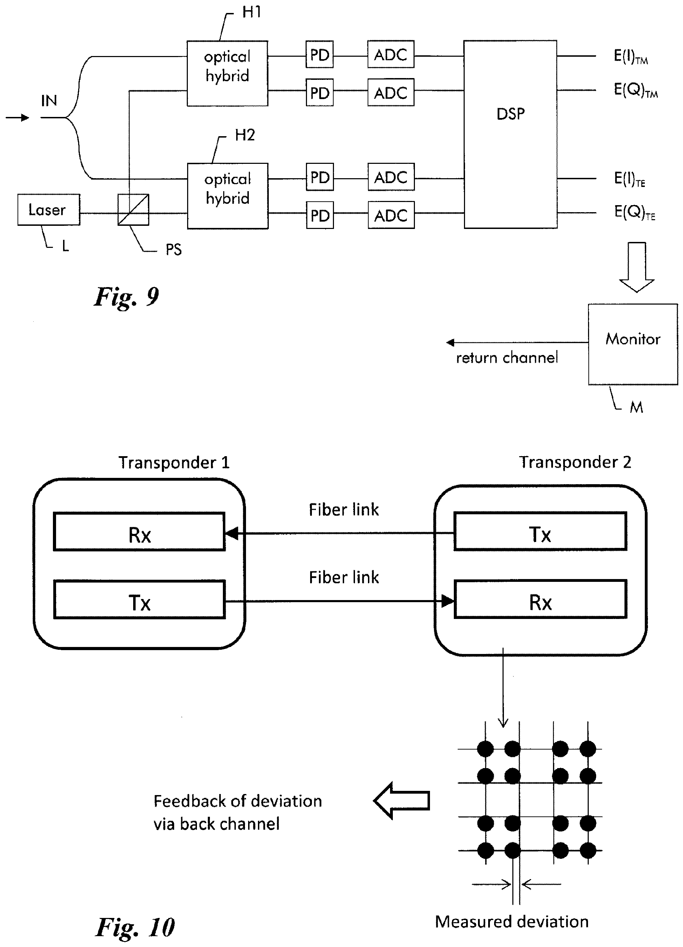

Figure 9 shows an optical receiver using coherent signal detection. The received optical signal arrives at receiver input IN. A 3 dB splitter splits the received optical signal and connects to two optical hybrids H1, H2, which serve as I/Q couplers. A tunable cw laser L serves as local oscillator. A polarization splitter PS splits the output signal of laser L in two orthogonal polarization components, one for each optical hybrid H1, H2. Since the optical hybrid is polarization sensitive, the two hybrids will deliver I and Q components in different polarization states of the input signal.

Each optical hybrid H1, H2 has two outputs for down-converted raw in-phase and quadrature signal components. Each signal component is fed to a photodiode acting as O/E converted and digitized using a ADC operating at a sampling rate above the symbol rate. The four digitized signals are fed to a signal processor DSP, which recovers the signals and delivers expectation values for the I and Q signal components of the transmitted data signals in the two orthogonal polarization states.

The signal processing includes compensation of chromatic dispersion and polarization mode dispersion, carrier phase recovery, frequency offset compensation, and non-linear compensation. The processing of the received signals to recover the data signals is known per se and described for example in the paper "Digital Signal Processing Algorithms for High-Speed Coherent Transmission in Optical Fibers" by M. Mussolini, University of Padua 2010, which is incorporated by reference herein.

According to an embodiments, the receiver contains a monitor M, which monitors certain characteristics of the received signal available at the digital signal processor DSP and provides these characteristics via a backchannel to the transmitter to support adjustment of filter parameters at the pre-compensation stage in the transmitter. The backchannel can be an overhead byte in the reverse direction of a bidirectional link or can use any other kind of communication, including control plane or management plane communication.

An embodiment of such monitoring is shown in figure 9. Transmitters Tx and receivers Rx are usually grouped to transponders for bidirectional optical signal transmission. A transmitter in transponder 1 contains a pre-compensation stage as explained in the embodiments before. A receiver Rx at transponder 2 contains a monitor, which measures the constellation diagram of the received signal. This can be easily accomplished by averaging over the expectation values for the different signal values 0-3 of the I and Q signal components. In the embodiment, the constellation diagram shows a deviation of the two inner amplitude levels of the I component with respect to nominal equidistant amplitude levels. This measured deviation is signaled back to transmitter Tx in transponder 1, where it is used to adjust the modulation levels of the modulator by appropriate pre-compensation at the DSP, e.g. through adjustment of a filter function that compensates for the non-linear modulator characteristics. Such adjustment of the filter parameters is accomplished through a controller in transmitter Tx, for example controller 20 in figure 1.

In order to adjust the DACs of the transmitter for I and Q branches, test patterns can be applied. To distinguish between I and Q branch and adjust both independantly, different patterns can be used for the two branches. In the monitor, the mean values of the received symbol combinations can be calculated and fed back to the transmitter. The Tx settings may be applied as static parameter sets or may be adjusted dynamically. Dynamic adjustment is advantageous because the optimum settings may depend on temperature dependent drift of drivers, modulator bias etc..

Use of this dynamic pre-compensation enables to operate the system at optimum performance for fiber tranmsision in linear regime. Typically optical transmission systems are operated close to the nonlinear threshold. A further improvement of the nonlinear threshold can be obtained through an additional pre-filtering of transmission impairments along the optical fiber.

As explained above, the receiver performs digital signal processing to remove signal distortions through chromatic dispersion and polarization mode dispersion. However, in an advantageous embodiment, part of such distortion compensation can be achieved through prefiltering in the transmitter. Distortion compensation can therefore be shared between the digital signal pre-compensation in the transmitter and distortion compensation through digital signal processing in the receiver.

Advantageously, the distortion compensation is shared such that the transmitter pre-compensates for distortion occurring over roughly the first half of the transmission distance and the receiver compensates for distortions assembled along the remainder of the transmission distance. After about half of the transmission distance, the optical signal would hence have a shape and waveform of an undistorted signal.

Another embodiment of a dynamic adjustment of filter parameters in the transmitter is shown in figure 10. The data signal DATA is subject to digital pre-compensation using a filter function 101, implemented using a look-up table LUT alone or in combination with a FIR filter. The pre-compensated data values drive through a DAC (not shown) an I/Q modulator 102. A controller 103, implemented using for example a $\mu$Processor or a PID, provides a DC bias voltage for I/Q modulator 102. The DC bias serves to adjust the operating point of the I/Q modulator, as it is known per se to those skilled in the art. A low frequency dither tone from a NF source 104 is added to the bias signal for monitoring purpose. The optical signal output from I/Q modulator 102 is branched as a feedback control to a O/E converter 105, a filter circuit 106, which selects the NF dither tone, and an integrator 107 to generate a feedback signal for controller 103 to adjust the DC bias voltage.

According to an aspect of this embodiment, controller 103 not only adjusts the DC bias voltage for I/Q modulator 102, but also adjusts filter parameters such as the modulation levels in the DSP that performs the digital pre-compensation function 101.

Although described for 16-QAM modulation, it should be understood that the present embodiments can also be applied to 64-QAM, 256-QAM or even higher constellations. The higher the number of constellations, the shorter the achievable transmission distance, however. Advanced FEC coding can be applied hence to increase the transmission distance.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. An optical transmitter, comprising a digital signal processor (10) coupled to a digital-to-analog converter (11, 12) for generating multi-level drive signals; and an I/Q modulator (15) for modulating an optical carrier signal with the drive signals to generate a quadrature amplitude modulated optical signal; wherein the digital signal processor (10) is adapted to perform a digital filter function on data elements to be transmitted to pre-compensate for a characteristic of at least one circuit component of the optical transmitter causing distortions in the quadrature amplitude modulated optical signal, **characterized in that** the digital filter function comprises a combination of a finite impulse response (FIR) filter (FIR1, FIR2) and a filter with non-linear characteristics (NL) to pre-compensate for a non-linear characteristic of the at least one circuit component, wherein the digital filter function comprises a function performed on a sequence of consecutive data elements (x1-x7), wherein the non-linear characteristics (NL) filter is applied to one or more inner data elements (x3-x5) of the sequence and wherein the finite impulse response (FIR) filter (FIR1, FIR2) is applied to two or more outer data elements (x1, x2, x6, x7) of the sequence.

2. An optical transmitter according to claim 1, wherein the non-linear characteristics (NL) filter comprises a look-up table (LUT).

3. An optical transmitter according to claim 2, wherein the look-up table (LUT) is applied to one or more inner data elements (x3-x5) of said sequence.

4. An optical transmitter according to claim 1, wherein said digital-to-analog converter (11, 12) has a resolution higher than the number of bits per symbol of each drive signal.

5. An optical transmitter according to claim 1, wherein said digital signal processor (10) is adapted to additionally perform a second digital filter function to pre-compensate for linear distortions of the optical signal during transmission over a part of an optical fiber link.

6. An optical transmitter according to claim 1, further comprising a controller (20) adapted to adjust filter parameters within said digital signal processor (10).

7. An optical transmitter according to claim 6, wherein said controller (20) is adapted to receive via a feedback channel information about signal characteristics determined at a remote optical receiver (Rx) and to determine adjustments for parameters of the optical transmitter from the received information.

8. An optical transmitter according to claim 1, wherein said non-linear component characteristic includes any of a bandwidth characteristic of said digital to analog converter (11, 12), a non-linear response curve of said I/Q modulator (15), and a non-linear characteristic of driver amplifiers 13, 14) provided to drive said I/Q modulator (15) with said drive signals.

9. An optical transmission network comprising an optical transmitter according to claim 1 and an optical receiver (Rx), wherein the optical transmitter is adapted to transmit the generated optical signal via an optical fibre link to the optical receiver (Rx), wherein the receiver (Rx) is adapted to process the received optical signal, to determine characteristics of the received optical signal, and to transmit the characteristics via a return channel to the optical transmitter, wherein the optical transmitter is adapted to determine from the characteristics adjustments to filter parameters of the digital filter function.

10. A method of transmitting a data signal over an optical fiber link; comprising generating multi-level drive signals using a digital signal processor (10) coupled to a digital-to-analog converter (11, 12), and modulating an optical carrier signal with said drive signals using an I/Q modulator (15) to generate a quadrature amplitude modulated optical signal for transmission; further comprising performing a digital filter function on data elements (x1-x7) to be transmitted to pre-compensate for a characteristic of at least one circuit component of the optical transmitter causing distortions in said quadrature amplitude modulated optical signal, **characterized in that** the digital filter function comprises a combination of a finite impulse response (FIR) filter (FIR1, FIR2) and a filter with non-linear characteristics (NL) to pre-compensate for a non-linear characteristic of the at least one circuit component, and that the digital filter function comprises a function performed on a sequence of consecutive data elements (x1-x7), wherein the method comprises applying the non-linear characteristics (NL) filter to one or more inner data elements (x3-x5) of the sequence and applying the finite impulse response (FIR) filter (FIR1, FIR2) to two or more outer data elements (x1, x2, x6, x7) of the sequence.

11. A method according to claim 10, further comprising, at a remote receiver (Rx), processing said optical signal to determine characteristics of the received signal; transmitting said characteristics via a return channel to the optical transmitter (Tx); and at the optical transmitter, determining from said characteristics adjustments to filter parameters of the digital filter function.

12. A method according to claim 11, wherein said characteristics comprise deviations of constellation points in a measured constellation diagram from nominal values.

13. A method according to claim 11, comprising modulating in the optical transmitter (Tx) said optical carrier with test patterns to determine adjustments of filter parameters in the optical receiver (Rx).

## Patentansprüche

1. Optischer Sender, einen digitalen Signalprozessor (10) umfassend, der an einen Digital-Analog-Wandler (11, 12) gekoppelt ist, um mehrstufige Treibersignale zu erzeugen; und einen I/Q-Modulator (15) zum Modulieren eines optischen Trägersignals mit den Treibersignalen, um ein quadraturamplitudenmoduliertes optisches Signal zu erzeugen; wobei der digitale Signalprozessor (10) angepasst ist, um eine digitale Filterfunktion auf zu sendende Datenelemente auszuüben, um ein Merkmal von mindestens einer Schaltungskomponente des optischen Senders, das Verzerrungen im quadraturamplitudenmodulierten optischen Signal verursacht, vorzukompensieren, **dadurch gekennzeichnet, dass** die digitale Filterfunktion eine Kombination aus einem Filter (FIR1, FIR2) mit endlicher Impulsantwort (FIR) und einem Filter mit nichtlinearen Merkmalen (NL) umfasst, um ein nichtlineares Merkmal der mindestens einen Schaltungskomponente vorzukompensieren, wobei die digitale Filterfunktion eine Funktion umfasst, die auf eine Folge von aufeinanderfolgenden Datenelementen (x1-x7) ausgeübt wird, wobei der Filter mit nichtlinearen Merkmalen (NL) auf ein oder mehrere innere Datenelemente (x3-x5) der Folge angewendet wird und wobei der Filter (FIR1, FIR2) mit endlicher Impulsantwort (FIR) auf zwei oder mehrere äußere Datenelemente (x1, x2, x6, x7) der Folge angewendet wird.

2. Optischer Sender nach Anspruch 1, wobei der Filter mit nichtlinearen Merkmalen (NL) eine Lookup-Tabelle (LUT) umfasst.

3. Optischer Sender nach Anspruch 2, wobei die Lookup-Tabelle (LUT) auf ein oder mehrere innere Datenelemente (x3-x5) der besagten Folge angewendet wird.

4. Optischer Sender nach Anspruch 1, wobei besagter Digital-Analog-Wandler (11, 12) eine Auflösung hat, die höher ist als die Bitanzahl pro Symbol von jedem Treibersignal.

5. Optischer Sender nach Anspruch 1, wobei besagter digitaler Signalprozessor (10) angepasst ist, um zusätzlich eine zweite digitale Filterfunktion auszuüben, um lineare Verzerrungen des optischen Signals während der Übertragung über einen Teil einer optischen Faserverbindung vorzukompensieren.

6. Optischer Sender nach Anspruch 1, weiterhin einen Controller (20) umfassend, der angepasst ist, um Filterparameter innerhalb des besagten digitalen Signalprozessors (10) einzustellen.

7. Optischer Sender nach Anspruch 6, wobei besagter Controller (20) angepasst ist, um über einen Rückkopplungskanal Informationen über Signalmerkmale zu empfangen, die an einem entfernten optischen Empfänger (Rx) bestimmt werden, und um Einstellungen für Parameter des optischen Senders aus den empfangenen Informationen zu bestimmen.

8. Optischer Sender nach Anspruch 1, wobei besagtes nichtlineares Komponentenmerkmal ein Beliebiges aus einem Bandbreitenmerkmal des besagten Digital-Analog-Wandlers (11, 12), einer nichtlinearen Antwortkurve des besagten I/Q-Modulators (15) und eines nichtlinearen Merkmals von Treiberverstärkern (13, 14) umfasst, die zum Steuern des besagten I/Q-Modulators (15) mit besagten Treibersignalen bereitgestellt sind.

9. Optisches Übertragungsnetzwerk, einen optischen Sender nach Anspruch 1 und einen optischen Empfänger (Rx) umfassend, wobei der optische Sender angepasst ist, um das erzeugte optische Signal über eine optische Faserverbindung an den optischen Empfänger (Rx) zu senden, wobei der Empfänger (Rx) angepasst ist, um das empfangene optische Signal zu verarbeiten, um Merkmale des empfangenen optischen Signals zu bestimmen und um die Merkmale über einen Rückkanal an den optischen Sender zu senden, wobei der optische Sender angepasst ist, um aus den Merkmalen Einstellungen an Filterparametern der digitalen Filterfunktion zu bestimmen.

10. Verfahren zum Senden eines Datensignals über eine optische Faserverbindung; umfassend das Erzeugen von mehrstufigen Treibersignalen unter Verwendung eines digitalen Signalprozessors (10), der an einen Digital-Analog-Wandler (11, 12) gekoppelt ist, und das Modulieren eines optischen Trägersignals mit besagten Treibersignalen unter Verwendung eines I/Q-Modulators (15), um ein quadraturamplitudenmoduliertes optisches Signal zum Senden zu erzeugen; weiterhin umfassend das Ausüben einer digitalen Filterfunktion auf zu sendende Datenelemente (x1-x7), um ein Merkmal von mindestens einer Schaltungskomponente des optischen Senders, das Verzerrungen im besagten quadraturamplitudenmodulierten optischen Signal verursacht, vorzukompensieren, **dadurch gekennzeichnet, dass** die digitale Filterfunktion eine Kombination aus einem Filter (FIR1, FIR2) mit endlicher Impulsantwort (FIR) und einem Filter mit nichtlinearen Merkmalen (NL) umfasst, um ein nichtlineares Merkmal der mindestens einen Schaltungskomponente vorzukompensieren, und dass die digitale Filterfunktion eine Funktion umfasst, die auf eine Folge von aufeinanderfolgenden Datenelementen (x1-x7) ausgeübt wird, wobei das Verfahren das Anwenden des Filters mit nichtlinearen Merkmalen (NL) auf ein oder mehrere innere Datenelemente (x3-x5) der Folge umfasst und das Anwenden der Filter (FIR1, FIR2) mit endlicher Impulsantwort (FIR) auf zwei oder mehrere äußere Datenelemente (x1, x2, x6, x7) der Folge.

11. Verfahren nach Anspruch 10, weiterhin umfassend, an einem entfernten Empfänger (Rx), das Verarbeiten des besagten optischen Signals, um Merkmale des empfangenen Signals zu bestimmen; das Senden der besagten Merkmale über einen Rückkanal an den optischen Sender (Tx); und am optischen Sender, das Bestimmen, aus den Merkmalen, von Einstellungen an Filterparametern der digitalen Filterfunktion.

12. Verfahren nach Anspruch 11, wobei besagte Merkmale Abweichungen von Konstellationspunkten in einem gemessenen Konstellationsdiagramm von Sollwerten umfassen.

13. Verfahren nach Anspruch 11, umfassend das Modulieren, im optischen Sender (Tx), des besagten optischen Trägers mit Testmustern, um Einstellungen von Filterparametern im optischen Empfänger (Rx) zu bestimmen.

**Revendications**

1. Émetteur optique, comprenant un processeur de signal numérique (10) couplé à un convertisseur numérique-analogique (11, 12) pour générer des signaux d'attaque multiniveaux ; et un modulateur I/Q (15) pour moduler un signal de porteuse optique avec les signaux d'attaque afin de générer un signal optique modulé en amplitude en quadrature; le processeur de signal numérique (10) étant adapté pour exécuter une fonction de filtre numérique sur des éléments de données devant être émis afin de pré-compenser une caractéristique d'au moins un composant de circuit de l'émetteur optique provoquant des distorsions dans le signal optique modulé en amplitude en quadrature, **caractérisé en ce que** la fonction de filtre numérique comprend une combinaison d'un filtre à réponse impulsionnelle finie (FIR) (FIR1, FIR2) et d'un filtre avec des caractéristiques non linéaires (NL) afin de pré-compenser une caractéristique non linéaire du au moins un composant de circuit, la fonction de filtre numérique comprenant une fonction exécutée sur une séquence d'éléments de données consécutifs (x1-x7), le filtre à caractéristiques non linéaires (NL) étant appliqué à un ou plusieurs éléments de données internes (x3-x5) de la séquence et le filtre à réponse impulsionnelle finie (FIR) (FIR1, FIR2) étant appliqué à deux éléments de données externes ou plus (x1, x2, x6, x7) de la séquence.

2. Émetteur optique selon la revendication 1, dans lequel le filtre à caractéristiques non linéaires (NL) comprend une table de consultation (LUT).

3. Émetteur optique selon la revendication 2, dans lequel la table de consultation (LUT) est appliquée à un ou plusieurs éléments de données internes (x3-x5) de ladite séquence.

4. Émetteur optique selon la revendication 1, dans lequel ledit convertisseur numérique-analogique (11, 12) a une résolution supérieure au nombre de bits par symbole de chaque signal d'attaque.

5. Émetteur optique selon la revendication 1, dans lequel ledit processeur de signal numérique (10) est adapté pour exécuter additionnellement une seconde fonction de filtre numérique afin de précompenser des distorsions linéaires du signal optique au cours de l'émission sur une partie d'une liaison par fibre optique.

6. Émetteur optique selon la revendication 1, comprenant en outre un contrôleur (20) adapté pour ajuster des paramètres de filtre à l'intérieur dudit processeur de signal numérique (10).

7. Émetteur optique selon la revendication 6, dans lequel ledit contrôleur (20) est adapté pour recevoir via un canal de rétroaction des informations sur des caractéristiques de signal déterminées au niveau d'un récepteur optique distant (Rx) et pour déterminer des ajustements pour des paramètres de l'émetteur optique à partir des informations reçues.

8. Émetteur optique selon la revendication 1, dans lequel ladite caractéristique de composant non linéaire comprend l'une quelconque d'une caractéristique de largeur de bande dudit convertisseur numérique-analogique (11, 12), d'une courbe de réponse non linéaire dudit modulateur I/Q (15), et d'une caractéristique non linéaire d'amplificateurs d'attaque (13, 14) pourvus pour attaquer ledit modulateur I/Q (15) avec lesdits signaux d'attaque.

9. Réseau d'émission optique comprenant un émetteur optique selon la revendication 1 et un récepteur optique (Rx), dans lequel l'émetteur optique est adapté pour émettre le signal optique généré via une liaison par fibre optique vers le récepteur optique (Rx), dans lequel le récepteur (Rx) est adapté pour traiter le signal optique reçu, pour déterminer des caractéristiques du signal optique reçu, et pour émettre les caractéristiques via un canal retour vers l'émetteur optique, dans lequel l'émetteur optique est adapté pour déterminer à partir des caractéristiques des ajustements sur des paramètres de filtre de la fonction de filtre numérique.

10. Procédé d'émission d'un signal de données sur une liaison par fibre optique; comprenant la génération de signaux d'attaque multiniveaux en utilisant un processeur de signal numérique (10) couplé à un convertisseur numérique-analogique (11, 12), et la modulation d'un signal de porteuse optique avec lesdits signaux d'attaque en utilisant un modulateur I/Q (15) afin de générer un signal optique modulé en amplitude en quadrature pour l'émission ; comprenant en outre l'exécution d'une fonction de filtre numérique sur des éléments de données (x1-x7) devant être émis afin de pré-compenser une caractéristique d'au moins un composant de circuit de l'émetteur optique provoquant des distorsions dans ledit signal optique modulé en amplitude en quadrature, **caractérisé en ce que** la fonction de filtre numérique comprend une combinaison d'un filtre à réponse impulsionnelle finie (FIR) (FIR1, FIR2) et d'un filtre avec des caractéristiques non linéaires (NL) afin de pré-compenser une caractéristique non linéaire du au moins un composant de circuit, et **en ce que** la fonction de filtre numérique comprend une fonction exécutée sur une séquence d'éléments de données consécutifs (x1-x7), le procédé comprenant l'application du filtre à caractéristiques non linéaires (NL) à un ou plusieurs éléments de données internes (x3-x5) de la séquence et l'application du filtre à réponse impulsionnelle finie (FIR) (FIR1, FIR2) à deux éléments de données externes ou plus (x1, x2, x6, x7) de la séquence.

11. Procédé selon la revendication 10, comprenant en outre, au niveau d'un récepteur distant (Rx), le traitement dudit signal optique afin de déterminer des caractéristiques du signal reçu ; l'émission desdites caractéristiques via un canal retour vers l'émetteur optique (Tx) ; et au niveau de l'émetteur optique, la détermination à partir desdites caractéristiques d'ajustements sur des paramètres de filtre de la fonction de filtre numérique.

12. Procédé selon la revendication 11, dans lequel lesdites caractéristiques comprennent des écarts de points de constellation dans un diagramme de constellation mesuré par rapport à des valeurs nominales.

13. Procédé selon la revendication 11, comprenant la modulation dans l'émetteur optique (Tx) de ladite porteuse optique avec des motifs de test afin de déterminer des ajustements de paramètres de filtre dans le récepteur optique (Rx).

**Fig. 1**

**Fig. 2**

**Fig. 3**

**Fig. 4**

**Fig. 5**

**Fig. 6**

**Fig. 7**

**Fig. 8**

*Fig. 9*

Feedback of deviation
via back channel

Measured deviation

*Fig. 10*

14

EP 2 634 934 B1

*Fig. 11*

15

**EP 2 634 934 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7826752 B

**Non-patent literature cited in the description**

- **M. NAKAMURA.** *Experimental Demonstration of 16-QAM Transmission with a Single Dual-Drive Mach-Zehnder Modulator*

- **M. MUSSOLINI.** Digital Signal Processing Algorithms for High-Speed Coherent Transmission in Optical Fibers. University of Padua, 2010